# EUROPÄISCHE PATENTSCHRIFT

(11) **EP 0 931 210 B1**
(45) Veröffentlichungstag und Bekanntmachung des Hinweises auf die Patenterteilung: **05.03.2003**
(21) Anmeldenummer: 97912151.4
(22) Anmeldetag: 09.10.1997
(51) Int. Cl.: F02D 9/02

(54) **TURBINE ZUR DROSSELUNG DER ANSAUGLUFT FÜR EINEN VERBRENNUNGSMOTOR**
INTERNAL COMBUSTION ENGINE SUCTION AIR THROTTLE TURBINE
TURBINE POUR L'ETRANGLEMENT DE L'AIR D'ASPIRATION POUR UN MOTEUR A COMBUSTION INTERNE

(30) Priorität: 09.10.1996 DE 19641555
(43) Veröffentlichungstag der Anmeldung: 28.07.1999
(73) Patentinhaber: FILTERWERK MANN & HUMMEL GmbH, 71631 Ludwigsburg (DE)
(72) Erfinder: FISCHER, Christian, D-70734 Fellbach (DE)
(74) Vertreter: Voth, Gerhard, Dipl.-Ing.
(86) Internationale Anmeldenummer: EP9705557
(87) Internationale Veröffentlichungsnummer: WO98015730

(56) Entgegenhaltungen:
- EP-A- 0 609 674
- WO-A-92/09800
- US-A- 5 394 848

## Beschreibung

Die Erfindung betrifft eine Drossel für gasförmige Medien, bestehend aus einer Turbine, welche einen Verdichter, eine Pumpe oder einen Generator antreibt, gemäß Anspruch 1.

Aus der DE OS 32 05 722 ist eine Drossel für gasförmige Medien, nämlich für die Ansaugluft einer Brennkraftmaschine bekannt. Diese macht sich die Erkenntnis zunutze, daß die bei der Lastregelung oder Steuerung an der Lastverstellvorrichtung auftretende Verringerung der kinetischen Energie der Strömung im Saugrohr umgewandelt wird in eine andere Energieform. Damit soll sowohl der in einem Energieverlust für die Brennkraftmaschine bestehende Nachteile der bekannten Drosselklappe als auch der in einem großen baulichen Aufwand bestehende Nachteil der bekannten drosselfreien Laststeuerung oder Regelung vermieden werden.

Aus der DE 32 05722 ist eine Lastverstellvorrichtung, insbesondere für eine Brennkraftmaschine eines Kraftfahrzeugs bekannt. Diese Lastverstellvorrichtung ist eine Arbeitsmaschine mit Mitteln zum Austausch von kinetischer Energie zwischen ihr und der Strömung im Saugrohr, wobei die Arbeitsmaschine zumindest im Teillastbereich der Brennkraftmaschine von der Strömung angetrieben wird. Die Arbeitsmaschine kann unter bestimmten Bedingungen auch als Lader arbeiten.

Ein Nachteil dieser Einrichtung ist darin zu sehen, daß eine Bypassleitung erforderlich ist. In dieser Bypassleitung ist die Arbeitsmaschine angeordnet. Sowohl in der Bypassleitung als auch in der Hauptleitung sind jeweils Drosselklappen vorgesehen zur Steuerung der Luftverteilung. Damit wird dieses System aufwendig und aufgrund der zusätzlich benötigten mechanischen Komponenten störanfällig.

Ein Nachteil der veröffentlichten Ausführung ist ferner darin zu sehen, daß die Drosselung der Brennkraftmaschine sehr träge erfolgt.

Der Erfindung liegt daher die Aufgabe zugrunde, eine Drossel für gasförmige Medien zu schaffen, welche einen einfachen Aufbau aufweist und für eine Vielzahl von Anwendungszwecken geeignet ist. Diese Aufgabe wird durch die Merkmale des Hauptanspruchs gelöst.

Durch die Erfindung wird damit die Energie, welche üblicherweise an Drosselstellen vernichtet wird, genutzt, und zwar durch eine Einrichtung wie z.B. einen Verdichter oder eine Pumpe, welche die Energie umwandelt. Mit einer Pumpe kann beispielsweise ein Druckspeicher mit Luft gespeist werden. Selbstverständlich besteht auch die Möglichkeit, die von der Turbine zur Verfügung gestellte Energie zum Antrieb einer Pumpe zu nutzen, welche Wasser, Öle oder andere Flüssigkeiten fördert.

Eine vorteilhafte Ausgestaltung der Erfindung liegt darin, daß beispielsweise die von der Turbine erzeugte Energie in verschiedene Energieformen umgewandelt werden kann. So besteht auch die Möglichkeit, die Energie in thermische Energie umzuwandeln und zur Heizung bzw. zur Erwärmung eines Systems zu nutzen.

Die Gestaltung der Turbine sieht vor, diese in Zwei-oder Mehrschalenbauweise herzustellen. Dies ist besonders bei der Verwendung von Kunststöff für das Gehäuse vorteilhaft, die Einzelteile können im Spritzgießverfahren hergestellt werden und sind deshalb besonders kostengünstig zu produzieren.

Die Turbine kann Kunststoff-oder Metallschaufelräder aufweisen, auch hier lassen sich bei der Verwendung von thermoplastischem Kunststoff die Schaufelräder wirtschaftlich herstellen.

Eine Weiterbildung der Erfindung sieht vor, die Rotorlagerung der Turbine elastisch auszubilden. Damit kann der Rotor um die Achse seines größten Trägheismomentes rotieren, es lassen sich geringe Unwuchten ausgleichen. Außerdem verringert eine elastische Lagerung den Lagerverschleiß.

Eine besonders vorteilhafte Ausgestaltung der Turbine liegt darin, daβ ungemantelte Laufräder angewendet werden und in einem Kunststoffgehäuse eine metallische Gegenschale zu den Laufrädern vorhanden ist. Die Spaltbreite zwischen dem jeweiligen Laufrad und der Gegenschale kann im Fertigungsprozeß oder bereits bei der konstruktiven Erarbeitung der Lösung optimiert werden.

Eine alternative Ausgestaltung der Turbine sieht vor, diese mit gemantelten Laufrädern zu versehen, zur Abdichtung gegenüber dem Gehäuse bieten sich beispielsweise Labyrinthdichtungen an.

Eine Ergänzung der Drossel besteht in einer vorteilhaften Weise beispielsweise darin, daß anströmseitig oder abströmseitig ein Filter für das gasförmige Medium vorgesehen ist. Bei der Verwendung des Filters auf der Anströmseite wird die Verschmutzung der Turbine verringert und damit eine höhere Lebensdauer der Turbine erzielt.

Diese und weitere Merkmale von bevorzugten Weiterbildungen der Erfindung gehen außer aus den Ansprüchen auch aus der Beschreibung und den Zeichnungen hervor.

Die Erfindung wir nachfolgend anhand von Ausführungsbeispielen näher erläutert.

Es zeigt:
- Figur 1: eine Turbine mit elastischer Rotorlagerung
- Figur 2: eine Detaildarstellung eines Laufrades
- Figur 3: ein Kunststoffgehäuse in Zweischaltentechnik
- Figur 4: ein Ansaugsystem mit Turbine

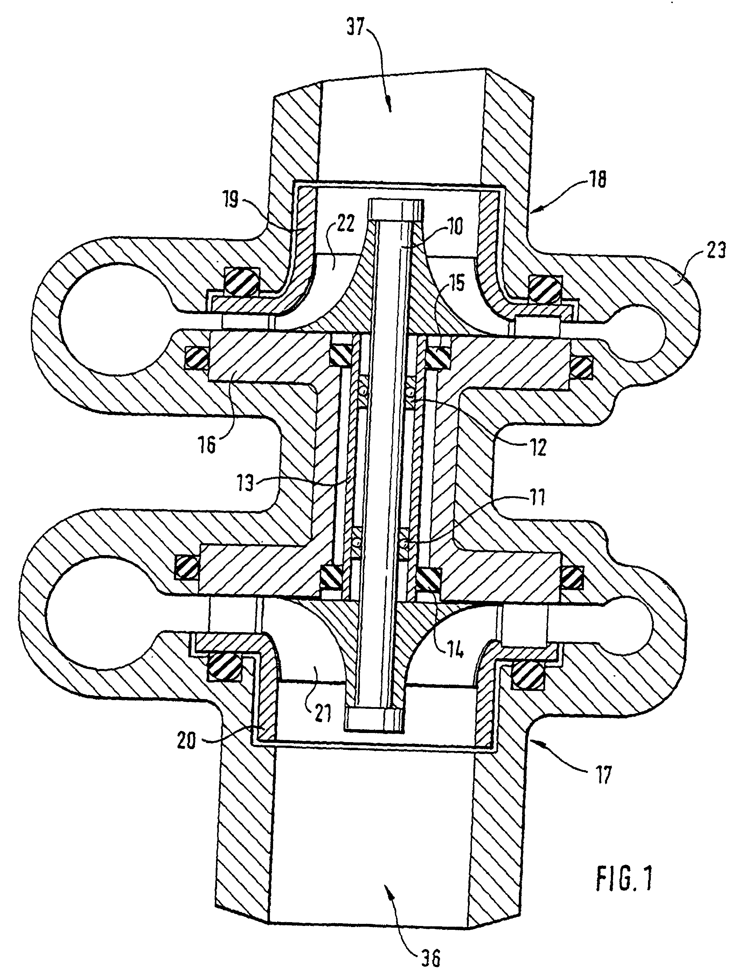

In der Detaildarstellung gemäß Figur 1 ist eine Turbine mit elastischer Lagerung des Rotors und angekuppelter Pumpe gezeigt. Die gemeinsame Welle 10 ist in üblicher Weise mit zwei Kugellagern 11, 12 in einer Lagerbuchse 13 rotierend befestigt. Die Lagerbuchse weist an ihren beiden Enden elastische Ringe 14, 15 auf, diese sind in entsprechenden Nuten eines Trägers 16 fixiert. Die elastische Bettung des Lagers hat den Vorteil, daß der Rotor auch bei geringen Unwuchten um ihre Trägheitsachse rotiert.

Sowohl auf der Turbinenseite 17 als auch auf der Pumpenseite 18 ist jeweils eine eingespritzte, eingesenkte oder eingeschnappte metallische Gegenschale 19, 20 vorgesehen. Die Spaltbreite zu den ungemantelten Laufrädern 21, 22 kann über Abstandshalter zwischen der Schale 19, 20 und dem Gehäuse 23 eingestellt werden.

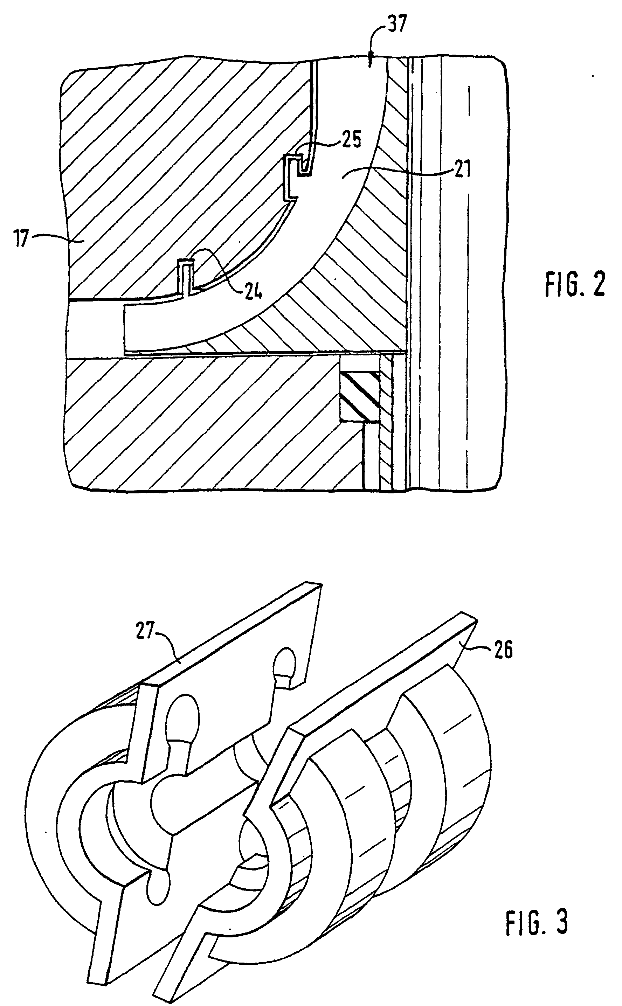

Es besteht jedoch auch die Möglichkeit, gemantelte Laufräder zu verwenden. In einer Detaildarstellung gemäß Figur 2 ist ein Ausschnitt eines gemantelten Laufrades gezeigt. Dieses weist in Verbindung mit dem Gehäuse mehrere Labyrinthdichtungsbereiche 24, 25 auf, die Labyrinthdichtung ist damit zum Teil in das Laufrad 11 integriert.

Das Laufrad 21 ist zu dem Gehäuse auf der Turbinenseite 17 hin, wie bereits erwähnt geschlossen, die jeweiligen Turbinenöffnungen 37 sind gestrichelt dargestellt. Der Spalt zwischen dem Laufrad 21 und der Turbinenseite 17 läßt sich selbstverständlich durch eine beliebige Variation der Labyrithdichtungsbereiche vergrößern und damit die Abdichtung verbessern.

Figur 3 zeigt ein Kunststoffgehäuse für eine Turbine in Zweischalentechnik. Die beiden Schalen 26, 27 weisen eine Trennung längs der Turbinenachse auf, das Laufrad ist hier nicht dargestellt, es wird nach dem Herstellen der beiden Kunststoffteile mit der gesamten Lagerung eingelegt und die Kunststoffteile miteinander im Ultraschallverfahren verschweißt.

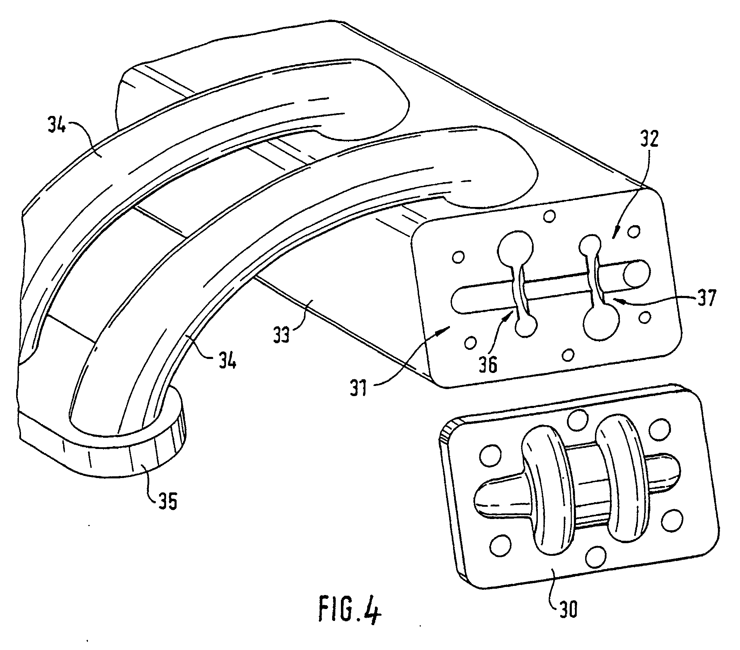

Figur 4 zeigt die Anordnung einer Drossel bzw. einer Turbine an einem Ansaugsystem einer Brennkraftmaschine. Das Ansaugsystem besteht aus einem Sammler 33, von dem aus ein oder mehrere Ansaugrohre 34 zu einer Anschlußflansch 35 führen. Dieser Anschlußflansch 35 wird an einer Brennkraftmaschine befestigt. Anstelle oder in einer Ergänzung der Drosselklappe für die Steuerung der Luftzufuhr zu der Brennkraftmaschine ist die Drossel in Form einer Turbine 30, 31, 32 vorgesehen. Dieser Turbine wird auf der Anströmseite 36 die Ansaugluft der Brennkraftmaschine zugeführt, diese Ansaugluft treibt aufgrund des Druckgefälles zwischen Umgebungsdruck und Ansaugunterdruck die Turbine an. Auf der Verdichterseite 37 wird Druckluft erzeugt die dem Fahrzeugsystem zur Verfügung gestellt werden kann. Der Aufbau der Turbine ist ähnlich der in Figur 3 gezeigten Darstellung, wobei eine Gehäuseseite 32 bereits durch die Stirnseite 31 des Ansaugsystems gebildet wird. Die zweite Halbschale 30 wird nach dem Einlegen der Laufräder und der Lagerung an der Stirnseite 31 verschraubt oder verschweißt. Auch hier bietet sich bei der Verwendung von thermoplastischem Kunststoff das Ultraschallschweißverfahren an.

## Patentansprüche

1. Drossel für gasförmige Medien, bestehend aus einer Turbine, welche einen Verdichter, eine Pumpe oder einen Generator antreibt, wobei die Drosselung des gasförmigen Stromes durch Änderung des Lastzustandes der Turbine (36) erfolgt und wobei die Turbine (36) in Zwei- oder Mehrschalenbauweise aufgebaut ist und ein Kunststoff- oder Metallgehäuse (17, 18) aufweist sowie Kunststoff- oder Metallschaufelräder (21, 22) hat und wobei die Turbine an einem Ansaugsystem einer Brennkraftmaschine angeordnet ist, welches aus einem Sammler (33) besteht, von dem aus ein oder mehrere Ansaugrohre (34) zu einem Anschlußflansch (35) führen und wobei dieser Turbine auf der Anströmseite (36) die Ansaugluft der Brennkraftmaschine zugeführt wird und diese Ansaugluft aufgrund des Druckgefälles zwischen Umgebungsdruck und Ansaugunterdruck die Turbine antreibt und wobei eine Gehäuseseite (32) bereits durch eine Stirnseite (31) des Ansaugsystems gebildet wird und eine zweite Halbschale (30) nach dem Einlegen von Laufrädem und der Lagerung an der Stirnseite (31) verschraubt oder verschweißt ist.

2. Drossel gemäß Anspruch 1, **dadurch gekennzeichnet, daß** die Rotorlagerung (14, 15) der Turbine elastisch ausgebildet ist.

3. Drossel nach Anspruch 1, **dadurch gekennzeichnet, daß** die Turbine ungemantelte Laufräder aufweist und bei einem gekennzeichnet, daß die Turbine ungemantelte Laufräder aufweist und bei einem Kunststoffgehäuse eine metallische Gegenschale zu den Laufrädern vorgesehen ist, wobei die Spaltbreite zwischen Laufrad und Gegenschale einstellbar ist.

4. Drossel nach Anspruch 1, **dadurch gekennzeichnet, daß** die Turbine gemantelte Laufräder aufweist, welche über eine oder mehrere Labyrinthdichtungen (24, 25) gegen das Gehäuse (17) abgedichtet sind.

5. Drossel nach Anspruch 1, **dadurch gekennzeichnet, daß** anströmseitig oder abströmseitig ein Filter für das gasförmige Medium vorgesehen ist.

## Claims

1. Throttle for gaseous media comprising a turbine which drives a compressor, a pomp or a generator, whereby the throttling of the gaseous flow is produced by changing the loading state of the turbine (36) and whereby the turbine (36) is built in two or more shell construction having a plastic or metallic housing (17, 18) and plastic or metallic blade wheels (21, 22) and whereby the turbine is arranged on the intake system of an internal combustion engine, which system is composed of a collector (33), wherefrom one or more suction pipes (34) guide to a connection flange (35) and whereby the suction air of the internal combustion engine is guided to this turbine on the side of the incoming flow (36); this suction air driving the turbine because of the pressure gradient between the ambient pressure and the suction pressure of the turbine, and whereby the housing side (32) is already built by a front side (31) of the suction system and a second halfshell (30) screwed or sealed on the front side, after the blade wheels and the bearing have been installed.

2. Throttle according to claim 1, chacterized in that the rotor bearing (14, 15) of the turbine is elastically realized.

3. Throttle according to claim 1, chacterized in that the turbine comprises blade wheels without a mantle and that, in the case of a plastic housing, a metallic counter - shell is provided for the blade wheels ; the gap length between the blade wheel and the counter - shell being adjustable.

4. Throttle according to claim 1, chacterized in that the turbine comprises blade wheels without a mantle which are sealed by means of one or several labyrinth sealings towards the housing (17).

5. Throttle according to claim 1, **characterized in that** a filter is provided for the gaseous medium on the side of the incoming or the outgoing flow .

## Revendications

1. Papillon pour des médias gazeux, constitué d'une turbine entraînant un compresseur, une pompe et un générateur , le papillon du flux gazeux se produisant par modification de l'état de charge de la turbine (36) et la turbine (36) étant construite en deux ou plusieurs coquilles (17, 18) et comportant un boîtier (17, 18) en plastique ou en métal et également deux roues en aube (21, 22) en plastique ou en métal ; la turbine étant disposée sur un système d'aspiration d'une machine à combustion interne, lequel système étant constitué d'un collecteur (33) duquel, un ou plusieurs tube (s) d'aspiration (34) conduise (nt) vers un flasque de raccordement (35) et où on conduit - du coté du flux arrivant (36) - l'air aspiré de la machine à combustion interne vers cette turbine ; ledit air aspiré entraînant la turbine du fait du gradient de pression entre la pression ambiante et la dépression d'aspiration et où un coté de boîtier (32) est déjà formé par un coté frontal (31) du système d'aspiration et où une deuxième demi-coque (30) est vissée ou soudée sur le coté frontal (31) après l'introduction des roues en aube et du logement.

2. Papillon selon la revendication 1, **caractérisé en ce que** le logement du rotor (14, 15) de la turbine est formé de manière élastique.

3. Papillon selon la revendication 1, **caractérisé en ce que** la turbine présente des roues en aube sans enveloppe et **en ce qu'**il est prévu une contre-coque métallique dans le cas d'un boîtier en matière plastique, pour les roues de circulation ; la largeur de l'écartement entre la roue en aube et la contre-coque étant réglable .

4. Papillon selon la revendication 1, **caractérisé en ce que** la turbine présente des roues en aube sans enveloppe; lesquels sont rendus étanches par une ou plusieurs garniture d'étanchéité à labyrinthe (24, 25) par rapport au boîtier (17).

5. Papillon selon la revendication 1, **caractérisé en ce qu'**il est prévu du coté de l'arrivée du flux ou du coté de la sortie du flux, un filtre pour le médium gazeux.
